Europäisches Patentamt

European Patent Office

Office européen des brevets

(11) Numéro de publication: **0 277 057**
**A1**

## (12) DEMANDE DE BREVET EUROPEEN

(21) Numéro de dépôt: **88400062.1**

(22) Date de dépôt: **13.01.88**

(51) Int. Cl.⁴: **F 16 C 3/02**
F 16 C 33/12, F 16 C 33/16,
F 16 C 17/12, F 16 C 17/10

(30) Priorité: **16.01.87 FR 8700452**

(43) Date de publication de la demande:
**03.08.88 Bulletin 88/31**

(84) Etats contractants désignés: **DE GB IT**

(71) Demandeur: **ABG SEMCA S.A.**
**408, avenue des Etats-Unis**
**F-31016 Toulouse Cédex (FR)**

(72) Inventeur: **Malabre, Christian**
**THOMSON-CSF SCPI 19, avenue de Messine**
**F-75008 Paris (FR)**

**Surman, Pierre**
**THOMSON-CSF SCPI 19, avenue de Messine**
**F-75008 Paris (FR)**

(74) Mandataire: **Grynwald, Albert et al**
**THOMSON-CSF SCPI 19, avenue de Messine**
**F-75008 Paris (FR)**

(54) **Palier ou butée hydrodynamique en particulier palier à feuilles.**

(57) Palier hydrodynamique, notamment palier à feuilles dont l'arbre est destiné à tourner à vitesse élevée, au moins 30 000 tours par minute.

La surface externe de l'arbre (10) est lubrifiée à sec par incrustation de bisulfure de molybdène ou de graphite.

FIG_2

EP 0 277 057 A1

**Description**

## PALIER OU BUTEE HYDRODYNAMIQUE, EN PARTICULIER PALIER A FEUILLES

L'invention est relative à un palier ou butée hydrodynamique, en particulier à un palier ou butée à feuilles.

Dans les machines tournantes à grande vitesse de rotation on utilise souvent des paliers ou butées à film fluide de sustentation évitant tout contact entre les surfaces solides. Le type le plus courant est le palier hydrodynamique dans lequel le film fluide est un film d'air engendré par la rotation de l'arbre ou le déplacement d'une autre pièce.

La plupart du temps les paliers hydrodynamiqes sont à feuilles : des feuilles minces sont fixées dans l'alésage d'un corps de palier de façon à se recouvrir partiellement et à constituer une surface interne flottante formant des coins de sustentation engendrant la création du film fluide entre les feuilles et l'arbre lorsque la vitesse de rotation de ce dernier atteint une valeur suffisante. De tels paliers sont par exemple décrits dans le brevet français n° 1 454 024 ou le brevet français n° 82 09476.

L'avantage des feuilles est qu'elles permettent, par leur déformabilité, un fonctionnement correct même quand l'élément mobile est décentré par rapport à l'élément fixe et, de plus, elles ont un effet d'amortissement des vibrations.

Au démarrage et lors de l'arrêt, ces paliers sont soumis à des contraintes très importantes du fait du frottement. Les efforts exercés sur l'arbre et les feuilles sont d'autant plus importants que la vitesse de rotation de l'arbre est élevée, habituellement de l'ordre de plusieurs milliers de tours par minute dans les phases d'arrêt ou de démarrage pour les utilisations aéronautiques.

Ces contraintes détériorent les surfaces en contact, ce qui augmente le coefficient de frottement et par conséquent le couple de demarrage et altère le fonctionnement.

Jusqu'à présent pour remédier à cet inconvénient on utilise du téflon sur les feuilles. Mais avec un tel lubrifiant à sec la durée d'utilisation s'est révélée insuffisante.

L'invention permet la réalisation d'un palier de plus grande durée de vie et dont la fabrication est aisée.

Le palier selon l'invention est caractérisé en ce que le lubrifiant à sec de l'arbre est constitué par une incrustation superficielle de bisulfure de molybdène ou de graphite.

On a constaté qu'un palier avec un arbre présentant un tel lubrifiant à sec avait un temps moyen de bon fonctionnement (durée de vie) de l'ordre de 20 000 heures alors qu'avec un lubrifiant des feuilles à base de téflon, dans les mêmes conditions le temps moyen de bon fonctionnement est de l'ordre de 16 000 heures.

On aurait pu penser que les particules incrustées auraient tendance à s'échapper du fait de la force centrifuge résultant des très grandes vitesses de rotation, au moins 30 000 tours par minute. Mais on a constaté qu'il n'en était rien et que l'arbre gardait ses propriétés lubrifiantes.

La projection de particules à incruster est plus aisée à mettre en oeuvre que le procédé de revêtement du téflon.

Dans le mode de réalisation préféré l'arbre, par exemple en acier, présente une couche superficielle de chrome dans laquelle est effectuée l'incrustation, de préférence de bisulfure de molybdène. Les particules de bisulfure de molybdène pénètrent de dquelques microns (μ) à l'intérieur du chrome. Elles forment aussi une couche externe de quelques microns qui disparait après un certain temps de fonctionnement sans cependant que les propriétés de lubrification soient altérées.

Le traitement peut être effectué non seulement sur la surface cylindrique de l'arbre mais également sur une surface formant butée axiale, perpendiculaire à l'axe.

D'autres caractéristiques et avantages de l'invention apprararîtront avec la description de certains de ses modes de réalisation, celle-ci étant effectuée en se référant aux dessins ci-annexés sur lesquels :
- la figure 1 est un schéma illustrant une étape du procédé de fabrication du palier selon l'invention, et
- la figure 2 est un schéma d'un palier et d'une butée à feuilles.

L'exemple de réalisation de l'invention qu'on va décrire en relation avec les figures est un palier hydrodynamique à feuilles pour un appareil d'application aéronautique avec un arbre tournant à une vitesse d'au moins 30 000 tours par minute, en général de l'ordre de 50 000 tours par minute.

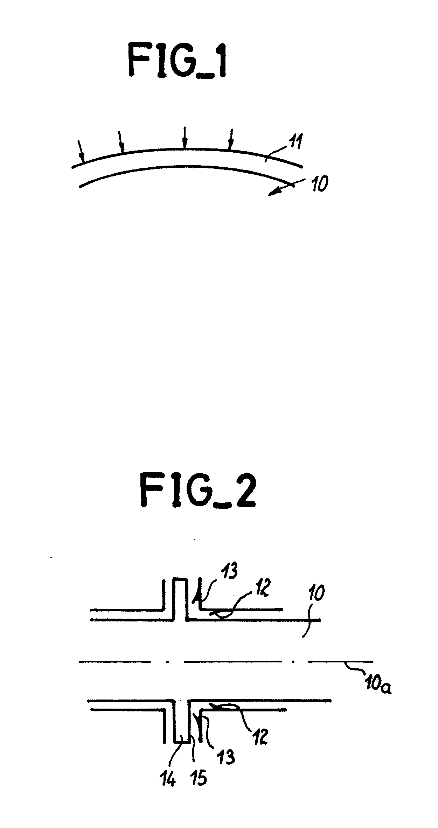

Dans cet exemple l'arbre 10 (figure 1) est en acier. Sa surface cylindrique présente un revêtement 11 en chrome dur rectifié. Le but du chrome dur est de conférer une bonne résistance à l'usure grâce à sa dureté superficielle d'environ 800 HV.

Dans la couche 11 dont l'épaisseur est environ 2/10 de millimètres, on incruste du bisulfure de molybdène. A cet effet on projette contre cette couche 11 un produit, appelé "microseal 200-1" de la Société MICROFRAL à Paris, qui est constitué par une poudre composée de bisulfure de molybdène et d'un liant.

Sur la figure 2 on a représentée un arbre 10 avec un palier à feuilles 12 et des butées axiales également à feuilles 13. L'arbre 10 présente, pour coopérer avec la butée axiale, une couronne en saillie 14. La face 15 de cette couronne 14 qui est perpendiculaire à l'axe $10_a$ et qui coopère avec les feuilles 13 est traitée comme la partie de l'arbre 10 coopérant avec les feuilles 12, c'est-à-dire qu'elle présente un revêtement de chrome dur 11 dans lequel est incrusté du bisulfure de molybdène.

L'incrustation de bisulfure de molybdène peut également être effectuée sur les feuilles 12 et 13 qui sont en un alliage de type inconel X 750.

Si les feuilles se recouvrent il est préférable de traiter chacune de leurs faces. Par contre si on a affaire à des feuilles ne se recouvrant pas il suffit d'incruster du bisulfure de molybdène uniquement sur la face qui, au démarrage et lors de l'arrêt, est en contact avec l'arbre ou la butée.

Pour incruster du bisulfure de molybdène sur les parties utiles de l'arbre 10 on procède de la façon suivante : on masque tout d'abord les parties qui ne doivent pas être traitées, puis on dégraisse les surfaces à traiter, par exemple dans un bain de trichloréthylène soumis à des ondes ultrasonores. Ensuite les surfaces à traiter sont soumises à un microbillage, c'est-à-dire à une projection de corindon de très faible granulométrie avec une pression d'application de l'ordre de 2 à 2,5 bars. Le but de cette dernière opération est de créer des microporosités dans la couche externe de chrome.

L'incrustation s'effectue ensuite par projection au pistolet, la vitesse de projection étant de l'ordre de 450 mètres par seconde. Le matériau projeté est, comme déjà indiqué, un mélange de bisulfure de molybdène et d'un liant. l'arrêt de la projection s'effectue quand la couleur de la pièce à traiter devient uniforme.

La dernière opération est un viellissement accéléré à l'étuve. Par exemple on procède à un étuvage à 150° C pendant deux heures ou à 90° C pendant quatre heures.

Le contrôle de l'épaisseur d'incrustation, en général de l'ordre de quelques microns seulement, est du type destructif. A cet effet une éprouvette est rendue solidaire de la pièce à traiter et subit le même traitement. Cette éprouvette est ensuite coupée et polie perpendiculairement à la surface traitée et la profondeur d'incrustation est mesurée par observation microscopique.

Le procédé d'incrustation ne modifie pas la géométrie ni les autres caractéristiques de la pièce à traiter. Il confère une propriété de lubrification à sec qui se conserve au cours du temps.

Dans une variante, à la place du bisulfure de molybdène on incruste du graphite.

Le palier à feuilles selon l'invention a une grande longévité aux vitesses de rotation élevées et aux hautes températures. En outre la capacité de charge totale de l'arbre est augmentée car l'invention permet de supporter des surcharges momentanées plus importantes qu'avec des paliers classiques présentant un lubrifiant à sec en téflon.

**Revendications**

1. Palier hydrodynamique, notamment palier à feuilles dont l'arbre est destiné à tourner à vitesse élevée, au moins 30 000 tours/minute, caractérisé en ce que la surface externe de l'arbre (10) est lubrifée à sec par incrustation de bisulfure de molybdène ou de graphite.

2. Palier selon la revendication 1, caractérisé en ce que l'arbre (10) présente un revêtement (11) de chrome dur dans lequel est effectuée l'incrustation.

3. Palier selon la revendication 2, caractérisé en ce que l'épaisseur de chrome dur est de l'ordre de 2/10 de millimètres.

4. Palier selon l'une quelconque des revendications précédentes, caractérisé en ce que l'arbre présente une couronne (14) dont une face (15), perpendiculaire à l'axe (10$_a$) de l'arbre, coopère avec une butée hydrodynamique, de préférence du type à feuilles (13).

5. Palier à feuilles selon l'une quelconque des revendications précédentes, caractérisé en ce qu'au moins une face des feuilles est recouverte d'un lubrifiant à sec formé d'une incrustation de bisulfure de molybdène ou de graphite.

6. Procédé de fabrication d'une arbre pour palier selon l'une quelconque des revendications précédentes, caractérisé en ce qu'on masque les parties de l'arbre ne devant pas subir le traitement, on dégraisse les surfaces à traiter, on effectue l'incrustation par projection, puis on étuve.

0277057

# FIG_1

# FIG_2

Office européen
des brevets

# RAPPORT DE RECHERCHE EUROPEENNE

Numero de la demande

EP 88 40 0062

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-2 054 765 (GARRETT CORP.)<br>* Page 3; figures 1-21 *<br>--- | 1,2,4,5 | F 16 C 3/02<br>F 16 C 33/12<br>F 16 C 33/16<br>F 16 C 17/12<br>F 16 C 17/10 |
| Y | US-A-3 063 763 (W.J. ZUBRISKY)<br>* En entier *<br>--- | 1,2,4,5 | |
| Y | US-A-3 075 279 (A.J. HALTNER)<br>* En entier *<br>--- | 1,2,4,5 | |
| A | DE-B-1 238 739 (ROLLS-ROYCE LTD)<br>--- | | |
| A | US-A-4 312 900 (L.G. SIMPSON)<br>----- | | |

DOMAINES TECHNIQUES RECHERCHES (Int. Cl.4)

F 16 C

Le présent rapport a été établi pour toutes les revendications

| Lieu de la recherche | Date d'achèvement de la recherche | Examinateur |
|---|---|---|
| LA HAYE | 15-04-1988 | BEGUIN C.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)